Europäisches Patentamt

European Patent Office

Office européen des brevets

(19)

(11) **EP 0 559 535 B1**

# (12) FASCICULE DE BREVET EUROPEEN

(45) Date de publication et mention
de la délivrance du brevet:
**31.01.1996 Bulletin 1996/05**

(51) Int. Cl.$^6$: **B64G 1/58**

(21) Numéro de dépôt: **93400510.9**

(22) Date de dépôt: **01.03.1993**

(54) **Dispositif de protection thermique utilisant la vaporisation et la surchauffe d'un liquide rechargeable**

Wärmeschutzvorrichtung mit Anwendung von Verdampfung und Überhitzung einer nachladbaren Flüssigkeit

Thermal protection device using the evaporation and overheating of a rechargeable fluid

(84) Etats contractants désignés:
**DE GB IT**

(30) Priorité: **03.03.1992 FR 9202517**

(43) Date de publication de la demande:
**08.09.1993 Bulletin 1993/36**

(73) Titulaire: **AEROSPATIALE Société Nationale Industrielle**
**F-75781 Paris Cédex 16 (FR)**

(72) Inventeur: **Le Touche, Roger**
**F-78290 Ecquevilly (FR)**

(74) Mandataire: **Poulin, Gérard**
**F-75008 Paris (FR)**

(56) Documents cités:
**EP-A- 0 358 897**      **US-A- 3 321 154**
**US-A- 3 392 781**      **US-A- 3 797 781**
**US-A- 3 908 936**

## Description

L'invention concerne un dispositif conçu pour assurer, pendant une durée illimitée, la protection thermique d'une structure susceptible de se trouver dans un environnement pouvant subir des élévations de température pratiquement illimitées.

Les applications d'un tel dispositif de protection thermique sont très nombreuses et concernent la protection des hommes et des matériels aussi bien au sol que dans l'atmosphère. Toutefois, l'invention est d'autant plus intéressante que les applications entraînent des variations de la pression ambiante et/ou l'application sur la structure à protéger d'accélérations et de décélérations variables.

L'invention concerne plus précisément un dispositif de protection thermique comprenant une couche de rétention initialement imprégnée d'un produit qui se trouve à l'état liquide lorsque la température extérieure n'excède pas un certain seuil. Un tel dispositif de protection thermique est communément appelé protection thermique "transpirante". En effet, lorsqu'il est soumis à une agression thermique extérieure, le produit initialement à l'état liquide qui est normalement retenu dans la couche de rétention se vaporise progressivement dans l'atmosphère, à partir de la couche de rétention. La vapeur ainsi formée est réchauffée par le flux thermique extérieur, avant de s'échapper dans l'atmosphère, de telle sorte que la quantité de chaleur évacuée est d'autant plus importante que le flux thermique auquel est soumis le dispositif est élevé. Pour cette raison, la couche de rétention imprégnée de liquide est parfois appelée "élément vaporisateur-surchauffeur" ou "élément hydrateur-surchauffeur". La configuration d'une telle protection thermique "transpirante", ainsi que son mode opératoire, sont décrits en détail dans le document FR-A-2 512 169.

Comme on l'a également décrit dans ce document, une telle protection thermique "transpirante" peut être équipée d'un système permettant de réinjecter du produit à l'état liquide dans la couche de rétention, afin de permettre une prolongation de la durée de vie de la protection thermique au-delà du temps nécessaire à la vaporisation complète du produit à l'état liquide contenu initialement dans la couche de rétention.

Il est généralement possible, sans difficulté particulière, de réinjecter à l'aide d'une pompe du produit à l'état liquide dans la couche de rétention d'une protection thermique "transpirante" lorsqu'on se trouve dans des conditions de pression et d'accélération sensiblement constantes comme c'est le cas dans la plupart des applications terrestres d'une telle protection thermique. En revanche, la réinjection du produit à l'état liquide dans la couche de rétention devient très complexe lorsque l'application envisagée suppose des variations importantes de pression et d'accélération, comme c'est notamment le cas pour les applications aéronautiques et spatiales. En effet, il devient alors pratiquement impossible d'alimenter la couche de rétention de façon homogène, de sorte que la protection thermique devient localement inefficace dans certaines zones. Pour ces applications particulières, il n'existe donc pas de protection thermique apte à remplir sa fonction pendant une durée illimitée, autorisant le cas échéant sa réutilisation sans maintenance particulière.

L'invention a précisément pour objet un dispositif de protection thermique du type protection thermique "transpirante", dont la conception originale permet d'assurer la réalimentation homogène en produit de la couche de rétention de la protection thermique quelles que soient les variations de pression et d'accélération subies par la structure portant cette protection thermique.

L'invention a également pour objet un dispositif de protection thermique du type protection thermique "transpirante", dont la conception originale permet d'assurer la protection d'une structure susceptible d'être soumise à des variations de pression et d'accélération importantes, pendant une durée illimitée, quelle que soit la température ambiante, et d'une manière telle que le dispositif de protection thermique puisse être réutilisé pour un nombre indéterminé de missions sans avoir à être remplacé.

Conformément à l'invention, ces résultats sont obtenus au moyen d'un dispositif de protection thermique comprenant au moins une couche de rétention, imprégnée d'un produit normalement à l'état liquide et ayant une température d'ébullition inférieure à une température maximale admissible d'une structure à protéger, et des moyens pour recharger en produit la couche de rétention, caractérisé par le fait que les moyens pour recharger la couche de rétention comprennent une membrane étanche au produit à l'état liquide et perméable au produit à l'état vapeur, interposée entre la couche de rétention et un espace d'alimentation en produit à l'état liquide, adjacent à la structure à protéger.

Dans un dispositif de protection thermique ainsi réalisé, la couche de rétention est réalimentée en produit à l'état vapeur lorsque la totalité du produit à l'état liquide contenue initialement dans cette couche de rétention a été vaporisée. Etant donné que le produit servant à réalimenter la couche de rétention pénètre dans celle-ci à l'état vapeur, cette réalimentation est effectuée automatiquement et de façon homogène quelles que soient les variations de pression et d'accélération subies par la structure à protéger. Il devient ainsi possible de réaliser des dispositifs de protection thermique pratiquement dépourvus de toute limitation de durée et de toute limitation de température dans les applications aéronautiques et spatiales, ce qui n'était pas le cas jusqu'à présent. En particulier, la durée d'utilisation pratiquement illimitée du dispositif de protection thermique selon l'invention permet de le réutiliser un très grand nombre de fois sans maintenance particulière, dans des conditions de température extrêmes, ce qui n'est le cas d'aucune protection thermique existante.

Dans un mode de réalisation préféré de l'invention, la membrane est séparée de la couche de rétention par un espace de séparation évitant que le produit à l'état liquide présent dans l'espace d'alimentation ne traverse accidentellement la membrane par capillarité, par suite d'un contact direct de la couche de rétention contre la membrane.

Dans un autre mode de réalisation de l'invention, la membrane présente des porosités, et une épaisseur supérieure à environ dix fois le diamètre de ces porosités. La membrane peut alors être en contact direct avec la couche de rétention car une traversée accidentelle de la membrane par le produit à l'état liquide, sous l'effet de la capillarité, est alors empêchée par l'épaisseur de la membrane.

Par ailleurs, la membrane est de préférence réalisée en un matériau non mouillable par le produit à l'état liquide et présentant de bonnes caractéristiques mécaniques jusqu'à la température d'ébullition du produit. Ce résultat peut être obtenu à l'aide d'un grand nombre de matériaux parmi lesquels on citera, uniquement à titre d'exemples, les tissus métalliques ou à base de fibres, enduits de polytétrafluoréthylène.

Dans le cas où la structure à protéger est étanche, l'espace d'alimentation en produit est directement au contact de cette structure. Au contraire, lorsque la structure à protéger n'est pas étanche, l'espace d'alimentation est séparé de cette structure par une paroi étanche.

L'introduction du produit à l'état liquide dans l'espace d'alimentation est effectuée de préférence à l'aide de moyens d'injection qui peuvent prendre de nombreuses configurations, selon l'application envisagée.

Dans le cas particulier où le dispositif de protection thermique est placé sur une partie de structure d'un engin spatial susceptible d'être soumis à un flux thermique intense pendant une phase d'accélération correspondant à son lancement et pendant une phase de décélération correspondant à son retour dans l'atmosphère terrestre, les moyens d'injection peuvent comprendre des moyens sensibles à des accélérations et à des décélérations de l'engin.

Selon un premier mode de réalisation de l'invention, les moyens d'injection comprennent alors un vérin double effet ayant un axe longitudinal orienté sensiblement dans le sens des accélérations et des décélérations de l'engin, et des moyens pour relier alternativement deux chambres opposées du vérin à un réservoir de produit à l'état liquide et à l'espace d'alimentation, selon que l'engin est soumis à des accélérations ou à des décélérations. Avantageusement, le vérin double effet présente alors une plus forte section du côté de l'engin vers lequel est orienté le dispositif de protection thermique que du côté opposé.

Selon un deuxième mode de réalisation de l'invention, les moyens d'injection comprennent une pompe pilotée par un moteur électrique dont la tension d'alimentation est régulée par un accéléromètre.

On décrira à présent, à titre d'exemple non limitatif, différents modes de réalisation de l'invention, en se référant aux dessins annexés, dans lesquels :

- la figure 1 est une vue en coupe représentant un écran de protection thermique conforme à l'invention ;
- la figure 2 est une vue schématique illustrant partiellement en coupe un premier mode de réalisation des moyens permettant d'injecter le liquide dans l'espace d'alimentation de l'écran de protection thermique de la figure 1 ; et
- la figure 3 est une vue schématique comparable à la figure 2 illustrant un deuxième mode de réalisation des moyens permettant d'injecter le liquide dans l'espace d'alimentation de l'écran de protection thermique de la figure 1.

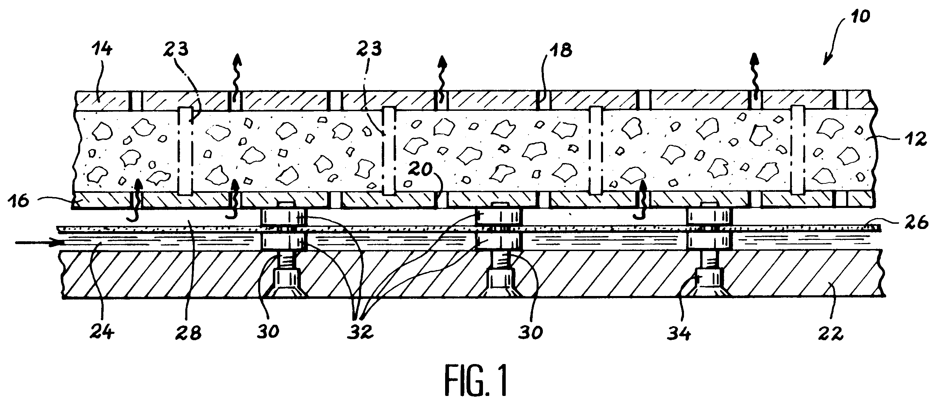

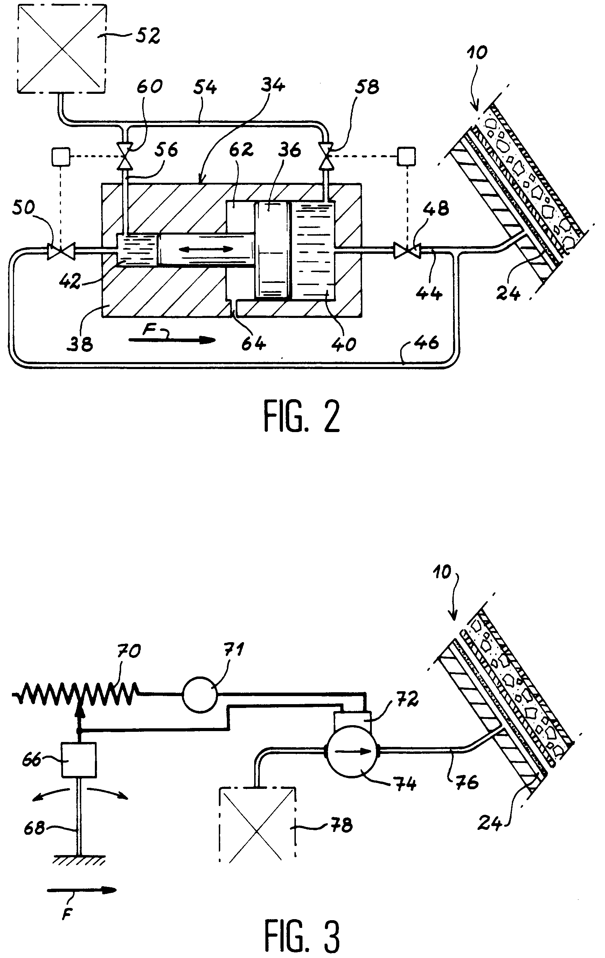

Le dispositif de protection thermique conforme à l'invention se compose essentiellement d'un écran de protection thermique, apte à être placé sur les parties de la structure qui doivent être protégées vis-à-vis d'une agression thermique extérieure, et de moyens pour injecter dans cet écran de protection thermique un produit à l'état liquide, afin de prolonger à volonté la période pendant laquelle l'écran de protection thermique remplit sa fonction. Un exemple de réalisation de l'écran de protection thermique est représenté sur la figure 1. En ce qui concerne les moyens d'injection du produit à l'état liquide, deux exemples de réalisation sont représentés sur les figures 2 et 3.

Sur la figure 1, la référence 10 désigne de façon générale un écran de protection thermique de type "transpirante", qui comporte principalement une couche de rétention 12 réalisée en un produit apte à absorber et à retenir en son sein un produit qui se trouve à l'état liquide dans les conditions normales de température et de pression. Comme cela est décrit en détail dans le document FR-A-2 512 169, le matériau qui remplit cette fonction dans la couche de rétention 12 peut notamment comprendre un gel aqueux de silice colloïdale, maintenu par une armature qui peut notamment être constituée d'un réseau de fibres, tissées ou non.

Le produit à l'état liquide qui imprègne initialement la couche de rétention 12 est choisi en fonction de la température maximale admissible pour la structure à protéger, dans les conditions de pression dans lesquelles le dispositif est appelé à fonctionner. Plus précisément, la température d'ébullition ou de vaporisation du produit à l'état liquide qui imprègne la couche de rétention 12 doit être inférieure à la température maximale admissible de la structure à protéger, dans les conditions précitées. Si cette température maximale admissible est supérieure à 100°C, l'eau constitue une solution particulièrement avantageuse, compte tenu de son coût particulièrement faible et de sa grande disponibilité. De nombreux autres produits peuvent cependant être choisis, notamment si la température de la structure doit rester inférieure à la température d'ébullition de l'eau à la pression considérée.

Afin de préserver l'intégrité et le confinement de la couche de rétention 12, cette couche est placée entre deux plaques ou films formant respectivement une plaque extérieure 14, en contact avec l'atmosphère extérieure et une plaque intérieure 16, tournée du côté de la structure 22 à protéger.

Les matériaux constituant les plaques 14 et 16 peuvent être de différentes natures, pourvu qu'ils remplissent un certain nombre de conditions découlant d'une part, de leur fonction définie précédemment et, d'autre part, de la nécessité de ne pas perturber le fonctionnement de l'écran de protection thermique. La première condition impose de choisir des matériaux dont la tenue mécanique reste bonne même dans les conditions extrêmes de température auxquelles peut être soumis l'écran de protection thermique et de ne pas engendrer de déformations notables de cet écran dans ces conditions extrêmes. La deuxième condition conduit à permettre le passage du produit imprégnant la couche de rétention 12, à l'état de vapeur, lorsqu'une élévation de température extérieure conduit à une vaporisation du produit à l'état liquide. Les plaques 14 et 16 peuvent par ailleurs présenter des structures rigides, semi-rigides ou souples, selon l'application considérée.

Dans l'exemple de réalisation illustré sur la figure 1, les plaques 14 et 16 sont des plaques rigides réalisées dans des matériaux dont les coefficients de dilatation respectifs n'entraînent pratiquement aucune déformation de l'écran de protection thermique lorsque la température varie entre les conditions extrêmes correspondant à l'application concernée. Ces matériaux peuvent notamment être des matériaux présentant des coefficients de dilatation pratiquement nuls tels que de l'Invar (marque déposée) et/ou des matériaux composites type carbone-carbone.

La porosité des plaques 14 et 16 vis-à-vis du produit contenu dans la couche de rétention 12, lorsqu'il est à l'état vapeur, est obtenue dans ce cas par des perforations 18 et 20 régulièrement réparties sur toute la surface des plaques 14 et 16, respectivement. En outre, l'intégrité de l'ensemble constitué par les plaques 14 et 16 et par la couche de rétention 12 placée entre ces plaques est assurée par des tiges de liaison 23 dont les extrémités sont fixées sur les plaques 14 et 16 et qui sont régulièrement réparties entre celles-ci. La fixation des tiges de liaison 23 sur les plaques 14 et 16 peut être réalisée par un moyen quelconque, par exemple par soudure, lorsque les plaques sont métalliques.

Conformément à l'invention, au lieu d'être fixé directement sur la structure 22 à protéger, illustrée sous la forme d'une tôle sur la figure 1, l'écran de protection thermique de type "transpirante" que constitue la couche de rétention 12 emprisonnée entre les plaques 14 et 16 est séparé de cette structure 22 par un espace d'alimentation 24 de l'écran 10 en produit à l'état liquide. Plus précisément, cet espace d'alimentation 24 est apte à recevoir un film du produit à l'état liquide, qui est séparé de l'écran de protection thermique 10 proprement dit par une membrane 26, elle-même séparée de la plaque intérieure 16 de l'écran par un espace de séparation 28 évitant tout contact direct entre la membrane 26 et la plaque intérieure 16. Le produit injecté dans l'espace d'alimentation 24 est le même que celui qui est imprégné initialement la couche de rétention 12.

Le matériau constituant la membrane 26 est choisi de façon à être étanche au produit injecté dans l'espace d'alimentation 24, lorsque ce produit est à l'état liquide. Au contraire, ce matériau doit être perméable au produit précité lorsqu'il est à l'état vapeur. Afin que ces caractéristiques soient respectées, le matériau utilisé pour réaliser la membrane 26 est un matériau non mouillable par le produit à l'état liquide et dont les caractéristiques mécaniques restent bonnes jusqu'à la température d'ébullition ou de vaporisation de ce produit. En effet, dans le cas contraire, l'étanchéité de la membrane 26 au produit à l'état liquide ne serait pas assurée.

Dans la pratique, les matériaux répondant à ces différents critères sont très nombreux et on citera ici uniquement à titre d'exemple le cas d'un tissu métallique ou d'un tissu de fibres de verre enduit de polytétrafluoréthylène, notamment dans le cas où le produit imprégnant la couche de rétention 12 et injecté dans l'espace d'alimentation 24 est de l'eau.

La membrane 26 présente des porosités uniformément réparties, dont le diamètre maximal (c'est-à-dire la dimension minimale de la plus grosse porosité de la membrane) détermine, pour un produit d'imprégnation donné de la couche de rétention 12, la hauteur de ce produit à l'état liquide stabilisée et bloquée par la membrane, selon la valeur de l'accélération à laquelle est soumise la structure. Cette hauteur H est définie par la relation suivante :

$$H = \frac{4\,A}{\varnothing\,\gamma\,\rho} \qquad (1)$$

avec :

H = hauteur de liquide stabilisée et bloquée par la membrane (en mètre)

A = tension superficielle du liquide (en $Nm^{-1}$)

$\gamma$ = accélération (g = 9,81 au sol)

$\varnothing$ = diamètre des porosités de la membrane (en mètre)

$\rho$ = masse volumique du liquide (en $kg/m^3$).

L'espace de séparation 18 qui est prévu entre la membrane 26 et l'écran de protection thermique 10 proprement dit, est destiné à éviter que le produit à l'état liquide contenu dans l'espace d'alimentation 24 ne puisse passer par capillarité dans la couche de rétention 12 alors qu'il se trouve encore à l'état liquide. En effet, cela pourrait conduire à vider partiellement l'espace d'alimentation 24 et, par conséquent, à rendre la protection thermique inefficace dans certaines zones.

L'espace de séparation 28 ainsi que l'espace d'alimentation 24 présentent des épaisseurs réduites (par exemple inférieures à 3 mm), de façon à limiter autant que possible l'encombrement du dispositif ainsi que son poids lorsque du produit à l'état liquide a été admis dans l'espace d'alimentation 24.

Dans une variante de réalisation non représentée, l'épaisseur de la membrane 26 est suffisante pour que l'espace de séparation 18 puisse être supprimé sans risque de voir le produit à l'état liquide traverser la membrane par capillarité. Concrètement, ce contact direct entre la membrane 26 et l'écran de protection thermique 10 est possible lorsque l'épaisseur de la membrane est supérieure à environ dix fois le diamètre des porosités formées dans cette dernière.

Parmi les nombreux moyens qui peuvent être utilisés pour fixer l'écran de protection thermique 10 ainsi que la membrane 26 sur la structure 22 à protéger, en ménageant de part et d'autre de la membrane les espaces 24 et 28, on a représenté sur la figure 1, uniquement à titre d'exemple, le cas où cette fonction est remplie par des tiges 30 fixées par une extrémité sur la plaque 16 et par leurs extrémités opposées sur la structure 22. Les espaces 24 et 28 sont formés par deux rondelles d'espacement 32 ou des dispositifs analogues placés sur chacune des tiges 30 et entre lesquels est emprisonnée la membrane 26.

Les moyens de fixation des tiges 30 sur la plaque 16 et sur la structure 22 peuvent être quelconques. Ainsi, les tiges 30 peuvent notamment être soudées sur la plaque 16 lorsque celle-ci est métallique, et présenter une extrémité opposée filetée sur laquelle est vissé un écrou 34 assurant la fixation de la tige sur la structure 22.

Il est à noter que la traversée de la membrane 26 par chacune des tiges 30 doit être réalisée de telle sorte que l'étanchéité de la membrane au produit à l'état liquide soit préservée. Cela peut être obtenu en plaçant entre les rondelles 32 et la membrane 26 des joints d'étanchéité (non représentés).

Par ailleurs, afin d'éviter la formation de ponts thermiques entre la structure 22 à protéger et la plaque extérieure 14, notamment dans le cas où les tiges 23 et 30 sont métalliques, ces tiges sont avantageusement disposées en quinconce les unes par rapport aux autres, comme l'illustre la figure 1.

Une étanchéité analogue doit également être prévue entre le produit à l'état liquide contenu dans l'espace d'alimentation 24 et la structure 22. Si cette structure est étanche, cette étanchéité est obtenue sans précaution particulière, sauf si les tiges 30 traversent la structure 22 comme l'illustre la figure 1, ce qui nécessite de prévoir un joint d'étanchéité (non représenté) entre chacune des rondelles 32 et la structure 22.

Dans le cas (non représenté) où la structure 22 à protéger n'est pas étanche, une peau d'étanchéité doit être placée sur cette structure, de façon à délimiter l'espace d'alimentation 24 de ce côté.

L'injection du produit à l'état liquide dans l'espace d'alimentation 24 peut être faite par un moyen quelconque tel qu'une pompe injectant le liquide à partir d'un réservoir de stockage prévu à cet effet.

Lorsque l'agression thermique dont la structure 22 doit être protégée coïncide avec des phases d'accélération et de décélération de cette structure, deux moyens d'injection particuliers vont à présent être décrits en se référant successivement aux figures 2 et 3. Cette application concerne notamment le cas où la structure à protéger est située sur un engin spatial apte à subir des échauffements lors de son lancement et lors de sa rentrée dans l'atmosphère terrestre.

Dans le mode de réalisation illustré sur la figure 2, les moyens d'injection du produit à l'état liquide comprennent un vérin double effet 34 dont l'axe longitudinal est orienté sensiblement parallèlement au sens de déplacement de l'engin, désigné par la flèche F sur la figure. Ce sens de déplacement correspond au sens des accélérations et des décélérations auquel est soumis l'engin lors du décollage et lors de sa rentrée dans l'atmosphère terrestre.

Le vérin double effet 34 comporte un piston étagé 36 apte à coulisser dans un cylindre 38, de façon à faire varier les volumes d'une chambre avant 40 et d'une chambre arrière 42 lorsque le piston 36 est soumis aux accélérations et aux décélérations précitées. Les chambres avant 40 et arrière 42 sont reliées à l'espace d'alimentation 24 de l'écran de protection thermique 10 par des tuyauteries 44, 46 équipées de vannes anti-retour 48, 50. Les tuyauteries 44 et 46 présentent avantageusement une partie commune débouchant dans l'espace d'alimentation 24.

Par ailleurs, les chambres avant 40 et arrière 42 communiquent également avec un réservoir 52 du produit à l'état liquide par deux tuyauteries 54 et 56 présentant avantageusement une partie commune débouchant dans ce réservoir 52. Chacune des tuyauteries 54 et 56 est équipée d'une vanne anti-retour 58 et 60. Ces vannes anti-retour 58 et 60 sont couplées avec les vannes anti-retour 48 et 50, de telle sorte que les vannes 48 et 60 sont ouvertes simultanément et que les vannes 50 et 58 sont alors fermées. Inversement, les vannes 50 et 58 sont ouvertes simultanément et les vannes 48 et 60 sont alors fermées.

Comme on l'a mentionné précédemment, le piston 36 est un piston étagé, c'est-à-dire que la partie du piston qui délimite la chambre avant 40 présente un plus grand diamètre que la partie du piston qui délimite la chambre arrière 42. Compte tenu de cette configuration, une chambre intermédiaire 62 est formée entre le piston 36 et le cylindre 38. Cette chambre intermédiaire 62 communique avec l'extérieur par un passage 64, afin de ne pas entraver les déplacements du piston 36.

Dans l'agencement qui vient d'être décrit, lorsque l'engin subit une accélération, le piston 36 tend à se déplacer vers l'arrière sous l'effet de son inertie, c'est-à-dire vers la gauche en considérant la figure 2. Un accéléromètre ou un système comparable provoque alors l'ouverture des vannes 50 et 58 et la fermeture des vannes 60 et 48. Par conséquent, le produit à l'état liquide présent dans la chambre arrière 42 est injecté par la tuyauterie 46 dans la chambre d'alimentation 24 de l'écran de protection thermique 10. Simultanément, le produit à l'état liquide contenu dans le réservoir 52 est introduit dans la chambre avant 40 par la tuyauterie 54. Etant donné que la chambre avant 40 présente un plus grand diamètre que la chambre arrière 42, un effet d'amplification de la force de poussée par laquelle le produit à l'état liquide est injecté dans la chambre d'alimentation 24 est obtenu. Cet effet d'amplification est déterminé de façon à compenser l'effet de recul dû à l'inertie du produit à l'état liquide, lorsque l'écran de protection thermique 10 est tourné vers l'avant de l'engin, comme l'illustre la figure 2.

A l'inverse, lorsque l'engin subit une décélération, le piston 36 tend à se déplacer vers l'avant de l'engin. Les vannes 48 et 60 sont alors ouvertes et les vannes 50 et 58 fermées. C'est alors le produit à l'état liquide contenu dans la chambre avant 40 qui est injecté dans la chambre d'alimentation 24 de l'écran de protection thermique 10, alors que du produit à l'état liquide en provenance du réservoir 52 est introduit dans la chambre arrière 42. Le rapport des sections entre les chambres avant et arrière du vérin 34 joue alors à l'inverse, ce qui compense le fait que le liquide présent dans la canalisation 44 tend alors, du fait de son inertie, à pénétrer naturellement dans la chambre d'alimentation 24, lorsque l'écran de protection thermique 10 est tourné vers l'avant.

Lorsque l'écran de protection thermique 10 est orienté en sens opposé, un fonctionnement comparable du dispositif est obtenu en inversant le vérin à double effet 34 par rapport à la description qui précède.

Dans un autre mode de réalisation des moyens d'injection, illustré sur la figure 3, l'engin est équipé d'un accéléromètre constitué par une masse 66 montée sur un ressort 68 de façon à pouvoir se déplacer vers l'arrière ou vers l'avant selon que l'engin est soumis à une accélération ou à une décélération. Comme précédemment, le sens de déplacement de l'engin, c'est-à-dire le sens de ces accélérations et de ces décélérations, est désigné par la flèche F. La masse 66 de l'accéléromètre actionne un rhéostat 70 placé dans un circuit électrique comprenant une source de courant 71 et un moteur électrique 72. Ce moteur électrique 72 est, de préférence, un moteur électrique à courant continu servant à actionner une pompe 74 placée dans une tuyauterie 76 qui relie un réservoir 78 du produit à l'état liquide à la chambre d'alimentation 24 de l'écran de protection thermique 10.

Dans cet agencement, la tension d'alimentation du moteur électrique 72 varie selon que l'engin est soumis à une décélération ou à une accélération. Selon la valeur de cette tension, la pompe 74 est actionnée plus ou moins rapidement, ce qui a pour effet d'injecter dans la chambre d'alimentation 24 de l'écran de protection thermique 10 le produit à l'état liquide dès que l'amplitude de l'accélération ou de la décélération nécessite l'entrée en action du dispositif de protection thermique selon l'invention.

En pratique, il est clair qu'un même engin peut être équipé de plusieurs écrans de protection thermique de différentes dimensions, disposés en des points stratégiques de l'engin. Dans ce cas, l'injection du produit à l'état liquide dans l'espace d'alimentation de chacun de ces écrans peut être réalisée à l'aide d'un moyen d'injection commun.

Par ailleurs, il peut s'avérer souhaitable de cloisonner l'espace d'alimentation 24 d'un même écran de protection thermique lorsque cet écran est de très grande dimension, afin de s'assurer que la hauteur de liquide stabilisée et bloquée par la membrane ne puisse jamais devenir inférieure à la hauteur de liquide éventuellement appliquée sur cette membrane.

Ainsi, en appliquant la relation (1) donnée précédemment, et dans l'hypothèse où l'on utilise comme liquide de l'eau et comme membrane un tissu métallique enduit de polytétrafluoréthylène comportant des porosités de diamètre égal ou inférieur à 100 μm, on obtient une hauteur d'eau stabilisée et bloquée d'environ 10 cm pour une accélération de 1 g, d'environ 2 cm pour une accélération de 5 g et d'environ 2 mm pour une accélération de 50 g. Par ailleurs, pour une accélération nulle (0 g) la hauteur de liquide bloquée par la membrane est infinie.

Cet exemple fait apparaître clairement que le diamètre des porosités doit être déterminé à l'avance en tenant compte de l'accélération maximale à laquelle la structure à protéger peut être soumise au cours de son utilisation.

Lorsqu'un dispositif de protection thermique conforme à l'invention est soumis à une agression thermique, il fonctionne dans un premier temps de la même manière que le dispositif décrit dans le document FR-A-2 512 169. En d'autres termes, le produit à l'état liquide qui imprègne initialement la couche de rétention 12 se vaporise progressivement depuis l'extérieur de l'écran et s'échappe de ce dernier à l'état de vapeur surchauffée. Tant que du produit à l'état liquide reste présent dans la couche de rétention, on est certain que la température de la structure 22 est inférieure à la température de vaporisation du produit.

Lorsque la totalité du produit à l'état liquide imprégnant initialement la couche de rétention 12 a été utilisée, la température de la plaque arrière 16 atteint et dépasse la température de vaporisation du produit à l'état liquide, et chauffe par convection la membrane 26 ainsi que le produit à l'état liquide alors admis dans l'espace d'alimentation 24. Les vapeurs ainsi créées dans la chambre 24 traversent la membrane 26 et alimentent de façon homogène la couche de rétention 12. Une alimentation en continu de l'espace d'alimentation 24, par exemple à l'aide d'une pompe et/ou de l'un des dispositifs décrits en se référant aux figures 2 et 3 permet de poursuivre pendant une durée illimitée la protection thermique de la structure 22, en garantissant que la température de la structure 22 reste inférieure à la température de vaporisation du produit. Il est à noter que ce résultat ne pouvait pas être obtenu auparavant, dans le cas où la structure était appelée à subir des variations de pression et de décélération importantes.

En plus de cet avantage essentiel du dispositif de protection thermique selon l'invention, il est à noter que ce dispositif permet d'obtenir ce résultat quel que soit le niveau de température atteint à l'extérieur de l'écran de protection thermique 10, puisque un accroîssement de la température a seulement pour effet d'accroître la consommation de produit pendant une période donnée.

Encore un autre avantage du dispositif de protection thermique selon l'invention concerne son caractère réutilisable sans limitation de durée, qui s'explique par le fait que le seul élément consommable est constitué par le produit que l'on injecte dans l'espace d'alimentation 24. Cette caractéristique constitue un avantage essentiel qui n'est procuré par aucun des dispositifs de protection thermique connus.

Bien entendu, l'invention n'est pas limitée aux modes de réalisations qui viennent d'être décrits à titre d'exemples, mais en couvre toutes les variantes. Ainsi, la structure particulière décrite en se référant à la figure 1 ne constitue qu'un exemple de réalisation parmi d'autres. On peut notamment remplacer l'écran de protection thermique 10 comprenant une seule couche de rétention 12 par un écran multicouches tel que celui qui est décrit dans le document FR-A-2 547 895. Par ailleurs, l'alimentation en produit à l'état liquide de l'espace d'alimentation 24 peut être faite en continu ou de façon discontinue par des moyens très variés, simples ou multiples, parmi lesquels les moyens décrits en se référant aux figures 2 et 3 ne constituent que des exemples parmi d'autres.

**Revendications**

1. Dispositif de protection thermique, comprenant au moins une couche de rétention (12), imprégnée d'un produit normalement à l'état liquide et ayant une température d'ébullition inférieure à une température maximale admissible d'une structure à protéger, et des moyens pour recharger en produit la couche de rétention, caractérisé par le fait que les moyens pour recharger la couche de rétention comprennent une membrane (26) étanche au produit à l'état liquide et perméable au produit à l'état vapeur, interposée entre la couche de rétention (12) et un espace d'alimentation (24) en produit à l'état liquide, adjacent à la structure à protéger.

2. Dispositif selon la revendication 1, caractérisé par le fait que la membrane (26) est séparée de la couche de rétention (12) par un espace de séparation (28).

3. Dispositif selon la revendication 1, caractérisé par le fait que, la membrane (26) présentant des porosités et une épaisseur supérieure à environ dix fois le diamètre de ces porosités, cette membrane (26) est en contact direct avec la couche de rétention (12).

4. Dispositif selon l'une quelconque des revendications 1 à 3, caractérisé par le fait que la membrane (26) est réalisée en un matériau non mouillable par le produit à l'état liquide et présentant de bonnes caractéristiques mécaniques jusqu'à la température d'ébullition du produit.

5. Dispositif selon l'une quelconque des revendications précédentes, caractérisé par le fait que, la structure à protéger étant étanche, l'espace d'alimentation (24) en produit est directement au contact de cette structure.

6. Dispositif selon l'une quelconque des revendications 1 à 4, caractérisé par le fait que, la structure à protéger n'étant pas étanche, l'espace d'alimentation (24) est séparé de cette structure par une paroi étanche.

7. Dispositif selon l'une quelconque des revendications précédentes, caractérisé par le fait que l'espace d'alimentation (24) communique avec des moyens d'injection (34,74) du produit à l'état liquide.

8. Dispositif selon la revendication 7, caractérisé par le fait que les moyens d'injection (34,74) sont des moyens sensibles à des accélérations et à des décélérations d'un engin comportant le dispositif de protection thermique.

9. Dispositif selon la revendication 8, caractérisé par le fait que les moyens d'injection comprennent un vérin double effet (34) ayant un axe longitudinal orienté dans le sens des accélérations et des décélérations de l'engin, et des moyens (48,50,58,60) pour relier alternativement deux chambres opposées (40,42) du vérin à un réservoir (52) de produit à l'état liquide et à l'espace d'alimentation (24), selon que l'engin est soumis à des accélérations ou à des décélérations.

10. Dispositif selon la revendication 9, caractérisé par le fait que le vérin à double effet (34) présente une plus forte section du côté de l'engin vers lequel est orienté le dispositif de protection thermique (10) que du côté opposé.

11. Dispositif selon la revendication 8, caractérisé par le fait que les moyens d'injection comprennent une pompe (74) pilotée par un moteur électrique (72) dont la tension d'alimentation est régulée par un accéléromètre (66,68).

**Claims**

1. Thermal protection device comprising at least one retention layer (12) impregnated with a product which is normally in the liquid state and having a boiling point below the maximum admissible temperature of a structure to be protected, and means for recharging with product the retention layer, characterized in that the means for recharging the retention layer comprise a membrane (26) tight to the product in the liquid state and permeable to the product in the vapour state, interposed between the retention layer (12) and a supply space (24) for the product in the liquid state, adjacent to the structure to be protected.

2. Device according to claim 1, characterized in that the membrane (26) is separated from the retention layer (12) by a separating space (28).

3. Device according to claim 1, characterized in that the membrane (26) has pores and a thickness exceeding approximately ten times the diameter of said pores, so that said membrane (26) is in direct contact with the retention layer (12).

4. Device according to any one of the claims 1 to 3, characterized in that the membrane (26) is made from a material not wettable by the product in the liquid state and having good mechanical characteristics up to the boiling point of the product.

5. Device according to any one of the preceding claims, characterized in that as the structure to be protected is tight, the product supply space (24) is in direct contact with said structure.

6. Device according to any one of the claims 1 to 4, characterized in that as the structure to be protected is not tight, the supply space (24) is separated from said structure by a tight wall.

7. Device according to any one of the preceding claims, characterized in that said supply space (24) communicates with means (34, 74) for injecting the product in the liquid state.

8. Device according to claim 7, characterized in that the injection means (34, 74) are means sensitive to accelerations and decelerations of a craft incorporating the thermal protection device.

9. Device according to claim 8, characterized in that the injection means incorporate a double-acting jack (34) having a longitudinal axis oriented in the direction of the accelerations and decelerations of the craft and means (48, 50, 58, 60) for alternately connecting two opposite chambers (40, 42) of the jack to a reservoir (52) for the product in the liquid state and to the supply space (24), as a function of whether the craft is exposed to accelerations or decelerations.

10. Device according to claim 9, characterized in that the double-acting jack (34) has a larger cross-section on the side of the craft towards which is oriented the thermal protection device (10) than on the opposite side.

11. Device according to claim 8, characterized in that the injection means comprise a pump (74) controlled by an electric motor (72), whose supply voltage is regulated by an accelerometer (66, 68).

**Patentansprüche**

1. Wärmeschutzvorrichtung, umfassend wenigstens eine Retentionsschicht (12), getränkt mit einem normalerweise im Flüssigzustand befindlichen Produkt mit einer Siedetemperatur, die niedriger ist als eine für eine zu schützende Struktur zulässige Maximaltemperatur, und Einrichtungen um die Retentionsschicht mit dem Produkt nachzutränken, **dadurch gekennzeichnet,** daß die Einrichtungen zum Nachtränken der Retentionsschicht eine Membran (26) umfassen, dicht für das Produkt im Flüssigzustand und durchlässig für das Produkt im Dampfzustand, die eingefügt ist zwischen die Retentionsschicht (12) und einen Raum (24) zur Versorgung mit dem Produkt im Flüssigzustand, angrenzend an die zu schützende Struktur.

2. Vorrichtung nach Anspruch 1, dadurch gekennzeichnet, daß die Membran (26) von der Retentionsschicht (12) getrennt ist durch einen Trennraum (28).

3. Vorrichtung nach Anspruch 1, dadurch gekennzeichnet - wobei die Membran (26) Porositäten aufweist und eine Dicke größer als ungefähr zehnmal der Durchmesser dieser Porositäten -, daß diese Membran (26) in direktem Kontakt ist mit der Retentionsschicht (12).

4. Vorrichtung nach einem der Ansprüche 1 bis 3, dadurch gekennzeichnet, daß die Membran (26) aus einem durch das Produkt im Flüssigzustand nicht benetzbaren Material hergestellt ist und bis zum Siedepunkt des Produkts gute mechanische Eigenschaften aufweist.

5. Vorrichtung nach einem der vorangehenden Ansprüche, dadurch gekennzeichnet - wobei die zu schützende Struktur dicht ist -, daß der Produktversorgungsraum (24) direkt in Kontakt ist mit dieser Struktur.

6. Vorrichtung nach einem der Ansprüche 1 bis 4, dadurch gekennzeichnet - wobei die zu schützende Struktur nicht dicht ist -, daß der Versorgungsraum (24) durch eine dichte Wand getrennt ist von dieser Struktur.

7. Vorrichtung nach einem der vorangehenden Ansprüche, dadurch gekennzeichnet, daß der Versorgungsraum (24) verbunden ist mit Injektionseinrichtungen (34,74) des Produkts im flüssigen Zustand.

8. Vorrichtung nach Anspruch 7, dadurch gekennzeichnet, daß die Injektionseinrichtungen (34,74) Einrichtungen sind, die auf Beschleunigungen und Verzögerungen eines die Wärmeschutzvorrichtung umfassenden Geräts reagieren.

9. Vorrichtung nach Anspruch 8, dadurch gekennzeichnet, daß die Injektionseinrichtungen einen doppeltwirkenden Zylinder (34) umfassen, mit einer in Richtung der Beschleunigungen und Verzögerungen des Geräts ausgerichteten Längsachse, und Einrichtungen (48,50,58,60) um abwechselnd zwei entgegengesetzte Kammern (40,42) des Zylinder zu verbinden mit einem Speicher (52) des Produkts im Flüssigzustand und dem Versorgungsraum (24), je nach dem, ob das Gerät Beschleunigungen oder Verzögerungen ausgesetzt ist.

10. Vorrichtung nach Anspruch 9, dadurch gekennzeichnet, daß der doppeltwirkende Zylinder (34) auf der Seite des Geräts, auf der sich die Wärmeschutzvorrichtung (10) befindet, einen größeren Durchmesser aufweist, als auf der entgegengesetzten Seite.

11. Vorrichtung nach Anspruch 8, dadurch gekennzeichnet, daß die Injektionseinrichtungen ein Pumpe (74) umfassen, angetrieben durch einen Elektromotor (72), dessen Versorgungsspannung durch einem Beschleunigungsmesser (66,68) geregelt wird.

FIG.1

EP 0 559 535 B1

FIG. 2

FIG. 3